# EUROPÄISCHE PATENTSCHRIFT

(11) **EP 2 862 340 B1**
(45) Veröffentlichungstag und Bekanntmachung des Hinweises auf die Patenterteilung: **19.09.2018**
(21) Anmeldenummer: 13726688.8
(22) Anmeldetag: 03.06.2013
(51) Int. Cl.: H04M 1/675, H04W 12/00

(54) **MOBILSTATION MIT BINDUNG ZWISCHEN ENDGERÄT UND SICHERHEITSELEMENT**
MOBILE STATION WITH LINK BETWEEN A TERMINAL AND A SECURITY ELEMENT
STATION MOBILE À LIAISON ENTRE UN TERMINAL ET UN ÉLÉMENT DE SÉCURITÉ

(30) Priorität: 13.06.2012 DE 102012011728
(43) Veröffentlichungstag der Anmeldung: 22.04.2015
(73) Patentinhaber: Giesecke+Devrient Mobile Security GmbH, 81677 München (DE)
(72) Erfinder: SPITZ, Stephan, 85757 Karlsfeld (DE); KÖHLER, Markus, 81739 München (DE)
(86) Internationale Anmeldenummer: PCT/EP2013/001619
(87) Internationale Veröffentlichungsnummer: WO 2013/185888

(56) Entgegenhaltungen:
- WO-A1-2007/042226
- US-A1- 2010 180 130
- US-A1- 2010 275 027

## Beschreibung

Die Erfindung betrifft eine Mobilstation, bestehend aus einem Endgerät und einem im Endgerät betreibbaren Sicherheitselement, mit Bindung zwischen Endgerät und entfernbarem Sicherheitselement (SIM-Lock).

Unter einem mobilen Endgerät wird ein Gerät zum Nutzen eines Mobilfunksystems in Verbindung mit einem Sicherheitselement verstanden, z.B. ein Mobiltelefon, Smart Phone oder PDA (Personal Digital Assistant) mit Mobiltelefonfunktion. Das Sicherheitselement ist in vielen Mobilfunksystemen als entfernbare Teilnehmerkarte (Mikroprozessor-Chipkarte) gestaltet. Herzstück der Teilnehmerkarte ist das Sicherheitsmodul, das Identitätsdaten enthält, wie beispielsweise die International Mobile Subscribers' Identity IMSI. Beispiele für Mobilfunksysteme sind GSM (Global System for Mobile Communications), UMTS (Universal Mobile Telecommunications System), IMT-2000 (International Mobile Communication 2000). Im GSM-Mobilfunksystem ist das Sicherheitsmodul als SIM (SIM = Subscriber Identity Module) bezeichnet, im UMTS-Mobilfunksystem als USIM (USIM = Universal SIM). Die Teilnehmerkarte wird in diesen Fällen häufig als SIM-Karte bzw. USIM-Karte bezeichnet. Als Sicherheitselemente werden weiter festimplementierte (z.B. festeingelötete) Sicherheitselemente vogeschlagen, z.B. eUICC (embedded UICC), die baulich vom Endgeräte-Chip getrennt sind, dabei aber festimplementiert sind und nur höchstens mit Zerstörung aus dem Endgerät entfernbar sind.

Mobile Endgeräte werden von Herausgebern, z.B. Netzwerkbetreibern von Mobilfunknetzen, häufig zu subventionierten Preisen angeboten. Im Gegenzug soll der Käufer das Endgerät zugunsten des Netzwerkbetreibers kostenpflichtig nutzen. Um die Nutzung zugunsten des Netzwerkbetreibers sicherzustellen, wird der Betrieb des Endgeräts durch Sim-Lock-Verfahren eingeschränkt. Durch das SIM-Lock kann das Endgerät z.B. nur mit einer einzelnen vorbestimmten Teilnehmerkarte, in einem vorbestimmten Mobilfunknetz, in einem vorbestimmten Land etc. genutzt werden.

DE 100 19 164 A1 beschreibt ein SIM-Lock-Verfahren, bei dem das Endgerät Teile der IMSI (z.B. Mobile Country Code MCC, Mobile Network Code MNC, Home Location Register HLR) aus der SIM-Karte mit Sollwerten vergleicht und entsprechend dem Vergleich die Nutzung des Endgeräts im Mobilfunknetz mit der SIM-Karte gewährt oder unterbindet.

US 2010/0180130 A1 offenbart eine Mobilstation mit einem Endgerät und einem Sicherheitselement, wobei eine Bindung zwischen Endgerät und Sicherheitselement mittels eines auf Grundlage eines geräte-spezifischen Schlüssels gebildeten Message Authentication Code MAC auf Integrität verifizierbar ist. Weiter offenbart US 2010/0180130 A1 ein Verfahren zur Verifizierung eines Steuerungsschlüssels, mit welchem Steuerungsschlüssel sich Einstellungen der Bindung ändern lassen.

WO 2007/042226 A1 offenbart eine Mobilstation mit einem Endgerät und einem Sicherheitsmodul. Im Sicherheitsmodul ist ein SIM-Applet gespeichert, mit dem durch äußere Parameter (z.B. geographischer Ort, Zeit, Netzwerk, Anrufernummer, Land etc.) gegebene Nutzungsbeschränkungen für das Endgerät auf Einhaltung geprüft werden können.

US 2010/0275027 A1 beschreibt eine Mobilstation mit einem Endgerät und einem Sicherheitsmodul. Das Endgerät ist in einem Boot-Modus und einem Runtime-Modus betreibbar. Geht beim im Runtime-Modus betriebenen Endgerät eine Nachricht zum Entsperren eines SIM-Lock ein, wird das Endgerät in den Boot-Modus geschaltet und die Gültigkeit der Nachricht im Boot-Modus verifiziert.

Herkömmlicherweise wird das SIM-Lock durch Eingabe eines beim Netzwerkbetreiber geheim verwahrten Freigabecodes in das Endgerät aufgehoben, so dass das Endgerät und SIM-Karte für den Betrieb in einem Mobilfunknetz nicht mehr aneinander gebunden sind. Dieses auf Freigabecodes basierende Entsperrsystem ist anfällig gegenüber Manipulationen. Beispielsweise werden ausgespähte Freigabecodes für jedermann zugänglich veröffentlicht und erlauben das unberechtigte Entsperren von SIM-Locks.

EP 1 271 992 B1 beschreibt ein Verfahren zur Prüfung des SIM-Lock zwischen einer SIM-Karte und einem Endgerät mittels eines abgesicherten Programms, wobei das Programm mit einem im Endgerät abgespeichertem Verifizierungsschlüssel verifiziert wird. Beispielsweise wird über zur Prüfung verwendete Daten mit einem privaten Schlüssel eine Signatur berechnet, und die Signatur wird mit dem entsprechenden öffentlichen Schlüssel als Verifizierungsschlüssel im Endgerät verifiziert. Alternativ werden die Daten mit einem symmetrischen Schlüssel verschlüsselt und zur Verifizierung im Endgerät mit dem Schlüssel entschlüsselt. Das in EP 1 271 992 B1 beschriebene SIM-Lock Verfahren ist durch im Chip des Endgeräts implementierte kryptographische Algorithmen geschützt. Durch Angriffe auf die Algorithmen könnte das Verifizierungsergebnis beeinflusst und somit auch dieser Schutz ausgehebelt werden.

Unter der Bezeichnung Trustzone Architektur ist eine zweigeteilte Laufzeit-Architektur für ein Mikroprozessorsystem bekannt, die zwei Laufzeitumgebungen umfasst. Eine erste, "Normal Zone" oder "Normal World" genannte unsichere Laufzeitumgebung ist durch ein Normalbetriebssystem (z.B. Android, Windows Phone, Symbian) gesteuert. Eine zweite, "Trustzone" oder "Trusted World" oder "Secure World" oder "Trusted Execution Environment TEE" genannte gesicherte oder vertrauenswürdige Laufzeitumgebung ist durch ein Sicherheitsbetriebssystem gesteuert.

Insbesondere sicherheitskritische Applikationen und manche Peripherie-Funktionen (z.B. Tastaturtreiber) werden durch das Sicherheitsbetriebssystem auf sichere Weise gesteuert. Applikationen unter dem Sicherheitsbetriebssystem werden auch als Trustlets bezeichnet, in Anlehnung an die Begriffe "Trust" (Vertrauen) und "Applet".

Generell lässt sich ein lauffähiger Prozessor in drei Ebenen einteilen, nämlich in die Hardwareebene, die Betriebssystemebene und die Applikationsebene. Das Sicherheitsbetriebssystem einer gesicherten Laufzeitumgebung ist der Betriebssystemebene zuzuordnen. Die Treiber für unterschiedliche Peripheriefunktionen sind der Hardwareebene zuzuordnen. Als spezieller Treiber auf Hardwareebene im Chip eines mobilen Endgeräts ist der Radio Interface Layer Treiber (RIL Treiber) vorgesehen, durch den der Chip des Endgeräts auf Hardwareebene mit Peripheriekomponenten, insbesondere mit einer im Endgerät betriebenen SIM-Karte, USIM-Karte, UICC, eUICC oder dergleichen kommuniziert. Applikationen in einer SIM-Karte, USIM-Karte, UICC, eUICC etc. werden in der Regel als Applets bezeichnet. Trustlets sind Applikationen im Chip des mobilen Endgeräts.

Das Dokument "Global Platform Device Technology: TEE System Architecture, Version 0.4, Public Review Draft October 2011, Document Reference: GPD_SPE_009" beschreibt ein mobiles Endgerät mit einer normalen oder unsicheren Ausführungsumgebung "Rich Execution Environment (REE)" und einer sicheren Ausführungsumgebung "Trusted Execution Environment (TEE)" (vgl. Kapitel 1).

SIM-Lock kann eine Bindung zwischen einem einzelnen Endgerät und einem einzelnen entfernbaren Sicherheitselement umfassen. Alternativ ist durch SIM-Lock mittels Sicherheitselement und Endgerät eine Bindung an einen bestimmten Netzbetreiber oder Gruppe von Netzbetreibern oder an ein geographisches Gebiet (z.B. Land) eingerichtet, womit bzw. worin das Endgerät mit dem Sicherheitselement betreibbar ist. Speziell SIM-Locks, die eine Bindung an Netzbetreiber oder geographisches Gebiet umfassen, können auch für festimplementierte (z.B. festeingelötete) Sicherheitselemente wie z.B. eUICC oder dergleichen sinnvoll sein.

Der Erfindung liegt die Aufgabe zu Grunde, eine Mobilstation, umfassend ein Endgerät und ein im Endgerät betreibbares entfernbares oder festimplementiertes Sicherheitselement, mit gesicherter Bindung (SIM-Lock) zwischen Endgerät und Sicherheitselement anzugeben. Weiter soll ein Verfahren zum sicheren Verifizieren der Bindung angegeben werden.

Die Aufgabe wird gelöst durch eine Mobilstation nach Anspruch 1. Vorteilhafte Ausgestaltungen der Erfindung sind in den abhängigen Ansprüchen angegeben.

Die Mobilstation nach Anspruch 1 umfasst ein Endgerät und ein im Endgerät betreibbares entfernbares oder festimplementiertes Sicherheitselement, z.B. SIM-Karte, USIM-Karte oder UICC. Zwischen Endgerät und Sicherheitselement ist eine Bindung eingerichtet, so dass das Endgerät und das Sicherheitselement nur gemäß der Bindung miteinander betreibbar sind. Im Sicherheitselement ist ein Geheimschlüssel gespeichert. Im Endgerät ist ein dem Geheimschlüssel entsprechender Verifizierungsschlüssel gespeichert. Hierdurch ist die Bindung zwischen dem Endgerät und dem Sicherheitselement mittels des Geheimschlüssels und des Verifizierungsschlüssels verifizierbar. Als Geheimschlüssel ist z.B. der private Schlüssel eines asymmetrischen Verschlüsselungssystems vorgesehen, als Verifizierungsschlüssel der dem privaten Schlüssel entsprechende öffentliche Schlüssel. Alternativ sind Geheimschlüssel und Verifizierungsschlüssel der gleiche geheimgehaltene symmetrische Schlüssel.

Die Mobilstation zeichnet sind dadurch aus, dass das Endgerät eine gesicherte Laufzeitumgebung (Trusted Execution Environment TEE) umfasst und der Verifizierungsschlüssel in der gesicherten Laufzeitumgebung gespeichert ist. Da der Verifizierungsschlüssel, mit dem die Bindung (SIM-Lock) verifizierbar ist, in der gesicherten Laufzeitumgebung des Endgeräts vorgesehen ist, ist zwischen dem Endgerät und dem Sicherheitselement ein Ende-zu-Ende-gesicherter Verbindungskanal eingerichtet, über den Ende-zu-Ende gesichert Daten ausgetauscht werden können. Somit ist der Verifizierungsvorgang gegen Manipulationen gesichert. Weiter ist in der gesicherten Laufzeitumgebung weiter zumindest ein Teil eines RIL-Treibers (RIL driver) implementiert, der zur Kommunikation auf Hardwareebene zwischen einem Sicherheitsbetriebssystem in der gesicherten Laufzeitumgebung und dem Sicherheitselement eingerichtet. Dabei ist die Bindungsapplikation dazu eingerichtet, innerhalb der gesicherten Laufzeitumgebung mit dem zumindest Teil des RIL-Treibers zu kommunizieren. Durch die Bindungsapplikation wird der RIL-Treiber entsprechend der Verifizierung der Bindung gesteuert. Somit findet zwar die Verifizierung auf Applikationsebene statt, die Durchsetzung eines der Verifizierung entsprechenden Betriebs der Mobilstation erfolgt dagegen direkt auf Hardwareebene und ist daher besonders sicher. Damit ist gemäß Anspruch 1 eine Mobilstation mit gesicherter Bindung zwischen Endgerät und Sicherheitselement geschaffen.

Wahlweise ist in der gesicherten Laufzeitumgebung eine exklusiv unter Steuerung der gesicherten Laufzeitumgebung betreibbare Bindungsapplikation implementiert, mit der die Bindung zwischen dem Endgerät und dem Sicherheitselement verifizierbar ist. Dabei ist der Verifizierungsschlüssel exklusiv durch die Bindungsapplikation aufrufbar. Die Verifizierung der Bindung ist somit in der gesicherten Laufzeitumgebung auf Applikationsebene bewirkt und hierdurch z.B. für einen Programmierer komfortabel zu handhaben. Als Bindungsapplikation ist z.B. ein Trustlet mit SIM Lock Inhalt vorgesehen.

Wahlweise ist im Sicherheitselement ein Bindungsapplet, d.h. ein SIM Lock Applet, implementiert, mit dem die Bindung zwischen dem Endgerät und dem Sicherheitselement verifizierbar ist, und wobei der Geheimschlüssel exklusiv durch das Bindungsapplet aufrufbar ist. Hierdurch ist im Sicherheitselement die Verifizierung der Bindung auf Applikationsebene bewirkt und hierdurch z.B. für einen Programmierer komfortabel zu handhaben. Wahlweise arbeitet, bei der Verifizierung der Bindung, das Bindungsapplet im Sicherheitselement mit der oben angeführten Bindungsapplikation (z.B. Trustlet) in der gesicherten Ausführungsumgebung zusammen. Somit wird die Bindung durchgängig auf Applikationsebene verifiziert. Hierdurch kann die Verifizierung der Bindung innerhalb einer einzigen Ebene, nämlich der Applikationsebene erfolgen. Wechsel der benutzten Ebene (Applikation, Betriebssystem oder Hardware), die bei der Programmierung einer Verifizierungsroutine Übersetzungen erforderlich machen würden und somit Fehlerquellen sind, entfallen.

Wahlweise weist das Endgerät weiter eine normale Ausführungsumgebung auf, wobei der Verifizierungsschlüssel aus der normalen Ausführungsumgebung unzugänglich ist. Das Endgerät hat somit eine zweigeteilte Laufzeitarchitektur, und die Bindung zwischen Endgerät und Sicherheitselement (SIM Lock) ist im sicheren Bereich des TEE verwirklicht und vom unsicheren Bereich der normalen Laufzeitumgebung entkoppelt.

Bei einem Verfahren zum Verifizieren der Bindung zwischen dem Endgerät und dem Sicherheitselement in einer Mobilstation wird durch das Endgerät eine Verifizierungsanfrage (Challenge) an das Sicherheitselement gesendet. Durch das Sicherheitselement wird an das Endgerät eine Verifizierungsantwort (Response) gesendet, in welcher eine mittels des Geheimschlüssels erzeugte Verifizierungsinformation (SIG) enthalten ist. Durch das Endgerät wird die Verifizierungsantwort (Response) mittels des Verifizierungsschlüssels geprüft. Abhängig vom Ergebnis des Prüfens wird die Bindung zwischen dem Endgerät und dem Sicherheitselement als bestehend oder nicht bestehend verifiziert.

Da der Verifizierungsschlüssel, mit dem die Bindung verifiziert wird, in der gesicherten Laufzeitumgebung des Endgeräts vorgesehen ist, ist zwischen dem Endgerät und dem Sicherheitselement ein Ende-zu-Ende-gesicherter Verbindungskanal eingerichtet, über den Ende-zu-Ende gesichert Daten ausgetauscht werden. Somit ist der Verifizierungsvorgang gegen Manipulationen gesichert.

Das zu Grunde liegende Basisverfahren ist hierbei an sich bekannt. Beispielsweise wird ein an sich bekanntes Challenge-Response-Verfahren verwendet. Dabei wird im Endgerät eine Zufallszahl erzeugt oder anderweitig bereitgestellt und als Challenge an das Sicherheitselement gesendet. Das Sicherheitselement verifiziert den Challenge mit dem Verifizierungsschlüssel. Beispielsweise verschlüsselt das Endgerät die Zufallszahl mit einem Geheimschlüssel eines asymmetrischen Schlüsselpaars und sendet das Chiffrat an das Sicherheitselement. Das Sicherheitselement entschlüsselt mit dem entsprechenden öffentlichen Schlüssel des Schlüsselpaars das Chiffrat. Alternativ verschlüsselt das Endgerät mit dem öffentlichen Schlüssel als Geheimschlüssel, und das Sicherheitselement entschlüsselt mit dem privaten Schlüssel als Verifizierungsschlüssel. Dies gelingt nur dem Sicherheitselement, das den richtigen öffentlichen bzw. privaten Schlüssel hat, und das hierdurch an das Endgerät gebunden ist. Alternativ verwenden Endgerät und Sicherheitselement den gleichen symmetrischen Schlüssel. Das Endgerät verschlüsselt die Zufallszahl, das Sicherheitselement entschlüsselt sie mit dem symmetrischen Schlüssel.

Bei einem Verfahren zur Inbetriebnahme einer Mobilstation wird mit einem Verfahren wie oben beschrieben die Bindung der Mobilstation verifiziert. Falls die Bindung zwischen dem Endgerät mit dem Sicherheitselement als bestehend verifiziert wird, wird die Inbetriebnahme der Mobilstation gewährt. Falls die Bindung zwischen dem Endgerät mit dem Sicherheitselement nicht bestehend verifiziert wird, wird die Inbetriebnahme der Mobilstation verhindert oder abgebrochen. Das Verhindern oder Abbrechen der Inbetriebnahme kann beispielsweise als Abbrechen des Bootvorgangs eines Betriebssystems gestaltet sein, oder alternativ als Start des Bootens eines alternativen Betriebssystems, das z.B. nur noch Notrufe zulässt.

Wahlweise ist im Endgerät in der gesicherten Laufzeitumgebung weiter zumindest ein Teil eines RIL-Treibers (RIL driver) implementiert (vgl. weiter oben). In diesem Fall wird, falls die Bindung zwischen dem Endgerät mit dem Sicherheitselement als bestehend verifiziert wird, durch den zumindest einen Teil des RIL-Treibers die Inbetriebnahme der Mobilstation auf Hardwareebene gewährt wird. Falls dagegen die Bindung zwischen dem Endgerät mit dem Sicherheitselement als bestehend verifiziert wird, wird durch den zumindest einen Teil des RIL-Treibers die Inbetriebnahme der Mobilstation auf Hardwareebene verhindert oder abgebrochen.

Falls das Endgerät weiter eine normale Ausführungsumgebung (Normal Zone) aufweist und der Verifizierungsschlüssel aus der normalen Ausführungsumgebung unzugänglich ist, wird wahlweise bei der Inbetriebnahme der Mobilstation zuerst die gesicherte Laufzeitumgebung in Betrieb genommen und anschließend die normale Ausführungsumgebung in Betrieb genommen, so dass die Bindung vor Inbetriebnahme der normalen Ausführungsumgebung (Normal Zone) verifiziert wird. Hierdurch ist sichergestellt, dass, falls eine SIM Lock Verletzung erkannt wird (z.B. weil das falsche Sicherheitselement im Endgerät eingelegt ist), die unsichere normale Ausführungsumgebung gar nicht erst in Betrieb genommen wird. Die bereits in Betrieb genommene sichere Ausführungsumgebung dagegen ist gegen Manipulationen wie Angriffe durch Schadsoftware (Trojaner etc.) oder missbräuchliche Umprogrammierung gesichert. Somit ist die Mobilstation durch die Implementierung des SIM Lock in der zuerst gestarteten sicheren Laufzeitumgebung besonders gut abgesichert. Beispielsweise wird ein Normalbetriebssystem (Rich OS) zum Betreiben der normalen Laufzeitumgebung bei fehlender Bindung zwischen Endgerät und Sicherheitselement (Erkennen einer SIM Lock Verletzung) nicht gestartet. Alternativ wird bei verifizierter fehlender Bindung zwischen Endgerät und Sicherheitselement lediglich ein Notbetriebssystem gestartet, das z.B. lediglich Notrufe ermöglicht.

Im Folgenden wird die Erfindung an Hand von Ausführungsbeispielen und unter Bezugnahme auf die Zeichnung näher erläutert, in der zeigen:
- Fig. 1: eine Mobilstation gemäß Ausführungsformen der Erfindung in Kommunikation mit einem Hintergrundserver, beim Einrichten einer Bindung zwischen Endgerät und Sicherheitselement;
- Fig. 2: die Mobilstation aus Fig. 1 beim Verifizieren der eingerichteten Bindung zwischen Endgerät und Sicherheitselement;
- Fig. 3: eine zweigeteilte Laufzeit-Architektur in einem mobilen Endgerät, gemäß einer Ausführungsform der Erfindung;
- Fig. 4: einen Bootprozess in einer Mobilstation, gemäß einer Ausführungsform der Erfindung.

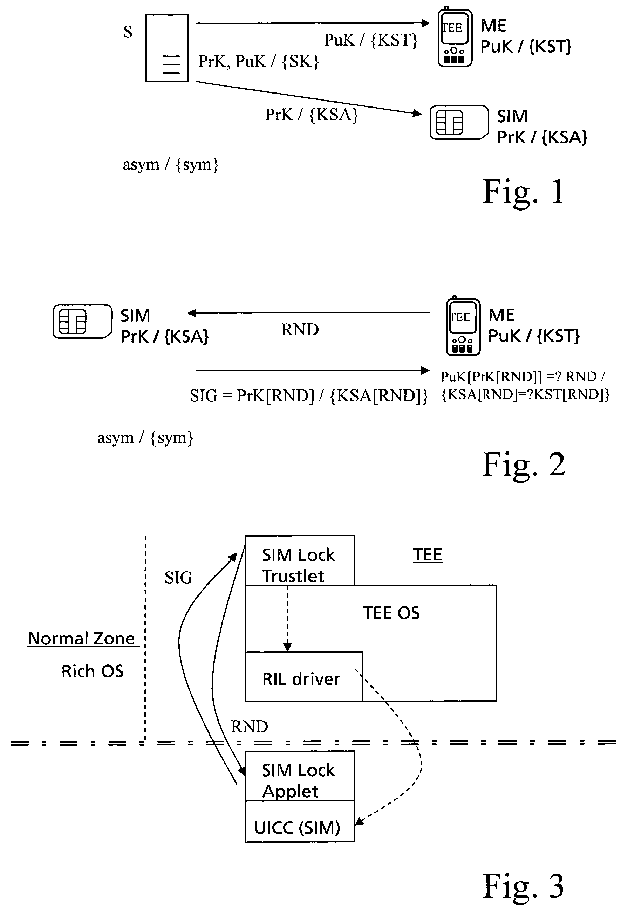

Fig. 1 zeigt eine Mobilstation gemäß Ausführungsformen der Erfindung in Kommunikation mit einem Hintergrundserver S. Die Mobilstation umfasst ein Endgerät ME (mobile entity) und als Sicherheitselement eine SIM-Karte SIM. Im Endgerät ME ist eine gesicherte Laufzeitumgebung TEE (trusted execution environment) implementiert, die durch ein Sicherheitsbetriebssystem TEE OS betrieben wird. In Fig. 1 gezeigt ist das Einrichten einer Bindung zwischen Endgerät ME und SIM-Karte. Gemäß einer ersten Ausführungsform wird für die Bindung ein asymmetrisches Schlüsselpaar PuK, PrK verwendet. Gemäß einer zweiten alternativen, in geschweiften Klammern beschrifteten Ausführungsform wird für die Bindung ein symmetrischer Schlüssel KS verwendet. Gemäß der ersten Ausführungsform wird beim Hintergrundserver S ein asymmetrisches Schlüsselpaar mit einem öffentlichen Schlüssel PuK und einem privaten Schlüssel PrK erzeugt. Der private Schlüssel PrK wird als Geheimschlüssel in die SIM-Karte gespeichert. Der öffentliche Schlüssel PuK wird als Verifizierungsschlüssel in die gesicherte Laufzeitumgebung TEE des Endgeräts ME gespeichert. Gemäß der zweiten alternativen, in geschweiften Klammern beschrifteten Ausführungsform wird statt des asymmetrischen Schlüsselpaars ein einzelner symmetrischer Schlüssel KS erzeugt und zum Einen als Geheimschlüssel KSA (Applet Schlüssel) in die SIM-Karte gespeichert und zum Anderen als Verifizierungsschlüssel KST (Trustlet Schlüssel) in die gesicherte Laufzeitumgebung TEE des Endgeräts ME gespeichert.

Fig. 2 zeigt die Mobilstation aus Fig. 1 beim Verifizieren der eingerichteten Bindung zwischen Endgerät ME und SIM-Karte. Das Endgerät ME sendet an die SIM-Karte eine Verifizierungsanfrage (Challenge) mit einer Zufallszahl RND. Die SIM-Karte verschlüsselt die Zufallszahl RND mit dem geheimen Schlüssel PrK zu einem Chriffrat Sig und sendet das Chiffrat Sig an das Endgerät ME. Das Endgerät ME entschlüsselt das empfangene Chiffrat mit dem öffentlichen Schlüssel PuK. Nur falls das Entschlüsselungsergebnis mit der gesendeten Zufallszahl RND übereinstimmt, hat die SIM-Karte den richtigen Schlüssel, und die Bindung wird als bestehend verifiziert. Andernfalls wird verifiziert, dass SIM-Karte und Endgerät ME nicht aneinander gebunden sind, d.h. ein SIM Lock Fehler wird detektiert. Bei der zweiten Ausführungsform verschlüsselt die SIM-Karte die vom Endgerät ME bekommene Zufallszahl RND mit dem symmetrischen Schlüssel KSA und sendet das so erzeugte Chiffrat an das Endgerät ME. Das Endgerät ME verschlüsselt die Zufallszahl mit dem eigenen symmetrischen Schlüssel KST und vergleicht das so selbst erzeugte Chiffrat mit dem von der SIM-Karte erhaltenen Chiffrat. Stimmen die Chiffrate überein, besteht Bindung zwischen SIM-Karte und Endgerät ME, andernfalls keine Bindung.

Fig. 3 zeigt, oberhalb der gestrichelten Doppellinie, eine zweigeteilte Laufzeit-Architektur in einem mobilen Endgerät ME, gemäß einer Ausführungsform der Erfindung. Unterhalb der gestrichelten Doppellinie ist eine im Endgerät ME betriebene SIM-Karte / UICC dargestellt. Die Laufzeit-Architektur umfasst eine durch ein Sicherheitsbetriebssystem TEE OS betrieben gesicherte Laufzeitumgebung TEE und eine durch ein Normalbetriebssystem Rich OS betrieben normale Laufzeitumgebung Normal Zone. In der gesicherten Laufzeitumgebung TEE ist unter dem Sicherheitsbetriebssystem TEE OS ein SIM Lock Trustlet implementiert, durch ein ebenfalls unter dem TEE OS lauffähiger RIL-Treiber RIL driver gesteuert wird. Das SIM Lock Trustlet ist zur Verifizierung der Bindung zwischen dem Endgerät ME und der SIM-Karte auf Applikationsebene eingerichtet. In der SIM-Karte ist ein dem SIM Lock Trustlet entsprechendes SIM Lock Applet implementiert. Unter Zusammenwirken von SIM Lock Trustlet und SIM Lock Applet ist die Bindung zwischen Endgerät ME und SIM-Karte auf Applikationsebene verifizierbar, z.B. mit den in Fig. 2 veranschaulichten Verfahren. Auf Hardwareebene lässt sich bei fehlgeschlagener SIM Lock Verifizierung (d.h. keine Bindung zwischen Endgerät und SIM-Karte) der Betrieb des Endgeräts mit der SIM-Karte verhindern.

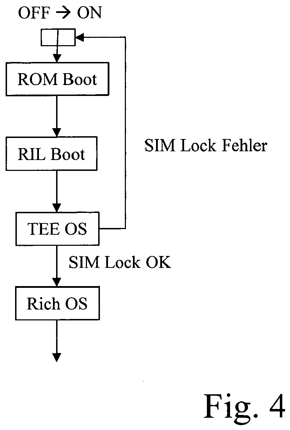

Fig. 4 veranschaulicht schematisch in chronologischer Reihenfolge die Basisprozesse bei einem Bootprozess in einer Mobilstation mit einem Endgerät ME und einer im Endgerät ME betriebenen SIM-Karte oder UICC, gemäß einer Ausführungsform der Erfindung. Das Endgerät ME wird eingeschaltet, wie durch das Symbol "OFF-ON" angedeutet ist. Der Permanentspeicher ROM wird gebootet (ROM Boot). Peripheriekomponenten, z.B. der Radio Interface Layer RIL, werden gebootet (RIL Boot). Das Sicherheitsbetriebssystem TEE OS wird gestartet und die sichere Laufzeitumgebung TEE in Betrieb gesetzt. Innerhalb des TEE OS wird die Bindung zwischen Endgerät ME und SIM-Karte verifiziert, z.B. wie in Fig. 2, Fig. 3 veranschaulicht. Ergibt die Verifizierung, dass Endgerät ME und SIM-Karte gepaart sind (SIM Lock OK), wird aus der gesicherten Laufzeitumgebung TEE heraus, unter Steuerung des Sicherheitsbetriebssystems TEE OS, das Normalbetriebssystem Rich OS gestartet. Ergibt die Verifizierung, dass Endgerät ME und SIM-Karte nicht gepaart sind (SIM Lock Fehler), wird aus der gesicherten Laufzeitumgebung TEE heraus, unter Steuerung des Sicherheitsbetriebssystems TEE OS, das Normalbetriebssystem Rich OS gestartet.

## Patentansprüche

1. Mobilstation mit einem Endgerät (ME) und mit einem im Endgerät (ME) betreibbaren entfernbaren oder festimplementierten Sicherheitselement (SIM), wobei zwischen dem Endgerät (ME) und dem Sicherheitselement (SIM) eine Bindung eingerichtet ist, so dass das Endgerät (ME) und das Sicherheitselement (SIM) nur gemäß der Bindung miteinander betreibbar sind, wobei in dem Sicherheitselement (SIM) ein Geheimschlüssel (PrK; KST) gespeichert ist und in dem Endgerät (ME) ein dem Geheimschlüssel entsprechender Verifizierungsschlüssel (PuK; KSA) gespeichert ist, so dass die Bindung zwischen dem Endgerät (ME) und dem Sicherheitselement (SIM) mittels des Geheimschlüssels (PrK; KST) und des Verifizierungsschlüssels (PuK; KSA) verifizierbar ist, **wobei** das Endgerät (ME) eine gesicherte Laufzeitumgebung (TEE) umfasst und der Verifizierungsschlüssel (PuK; KST) in der gesicherten Laufzeitumgebung (TEE) gespeichert ist, und dass in der gesicherten Laufzeitumgebung (TEE) weiter zumindest ein Teil eines Radio Interface Layer, RIL, Treibers (RIL driver) implementiert ist, der zur Kommunikation auf Hardwareebene zwischen einem Sicherheitsbetriebssystem in der gesicherten Laufzeitumgebung (TEE) und dem Sicherheitselement (SIM) eingerichtet ist, und wobei eine Bindungsapplikation (SIM Lock Trustlet) dazu eingerichtet ist, innerhalb der gesicherten Laufzeitumgebung (TEE) mit dem zumindest Teil des RIL-Treibers (RIL driver) zu kommunizieren.

2. Mobilstation nach Anspruch 1, wobei in der gesicherten Laufzeitumgebung (TEE) eine exklusiv unter Steuerung der gesicherten Laufzeitumgebung (TEE) betreibbare Bindungsapplikation (SIM Lock Trustlet) implementiert ist, mit der die Bindung zwischen dem Endgerät (ME) und dem Sicherheitselement (SIM) verifizierbar ist, und wobei der Verifizierungsschlüssel (PuK; KST) exklusiv durch die Bindungsapplikation (SIM Lock Trustlet) aufrufbar ist.

3. Mobilstation nach Anspruch 1 oder 2, wobei in dem Sicherheitselement (SIM) ein Bindungsapplet (SIM Lock Applet) implementiert ist, mit dem die Bindung zwischen dem Endgerät (ME) und dem Sicherheitselement (SIM) verifizierbar ist, und wobei der Geheimschlüssel (PrK; KSA) exklusiv durch das Bindungsapplet (SIM Lock Applet) aufrufbar ist.

4. Mobilstation nach einem der Ansprüche 1 bis 3, wobei das Endgerät (ME) weiter eine normale Ausführungsumgebung (Normal Zone) aufweist, wobei der Verifizierungsschlüssel (PuK; KST) aus der normalen Ausführungsumgebung (Normal Zone) unzugänglich ist.

5. Verfahren, in einer Mobilstation nach einem der Ansprüche 1 bis 4, zum Verifizieren der Bindung zwischen dem Endgerät (ME) und dem Sicherheitselement (SIM), wobei durch das Endgerät (ME) eine Verifizierungsanfrage (RND) an das Sicherheitselement (SIM) gesendet wird, durch das Sicherheitselement (SIM) an das Endgerät (ME) eine Verifizierungsantwort gesendet wird, in welcher eine mittels des Geheimschlüssels (PrK; KSA) erzeugte Verifizierungsinformation (SIG) enthalten ist, durch das Endgerät (ME) die Verifizierungsantwort mittels des Verifizierungsschlüssels (PuK; KST) geprüft wird und abhängig vom Ergebnis des Prüfens die Bindung zwischen dem Endgerät (ME) und dem Sicherheitselement (SIM) als bestehend oder nicht bestehend verifiziert wird.

6. Verfahren zur Inbetriebnahme einer Mobilstation, wobei mit einem Verfahren nach Anspruch 5 die Bindung der Mobilstation verifiziert wird und,
- falls die Bindung zwischen dem Endgerät (ME) mit dem Sicherheitselement (SIM) als bestehend verifiziert wird, die Inbetriebnahme der Mobilstation gewährt wird, und,
- falls die Bindung zwischen dem Endgerät (ME) mit dem Sicherheitselement (SIM) als nicht bestehend verifiziert wird, die Inbetriebnahme der Mobilstation verhindert oder abgebrochen wird.

7. Verfahren nach Anspruch 6, wobei die Mobilstation weiter nach einem der Ansprüche 2 bis 4 gestaltet ist.

8. Verfahren nach Anspruch 6 oder 7, wobei
- falls die Bindung zwischen dem Endgerät (ME) mit dem Sicherheitselement (SIM) als bestehend verifiziert wird, durch den zumindest einen Teil des RIL-Treibers (RIL driver) die Inbetriebnahme der Mobilstation auf Hardwareebene gewährt wird, und,
- falls die Bindung zwischen dem Endgerät (ME) mit dem Sicherheitselement (SIM) als nicht bestehend verifiziert wird, durch den zumindest einen Teil des RIL-Treibers (RIL driver) die Inbetriebnahme der Mobilstation auf Hardwareebene verhindert oder abgebrochen wird.

9. Verfahren nach Anspruch 8, wobei das Endgerät (ME) weiter eine normale Ausführungsumgebung (Normal Zone) aufweist, wobei der Verifizierungsschlüssel (PuK; KST) aus der normalen Ausführungsumgebung (Normal Zone) unzugänglich ist, und wobei bei der Inbetriebnahme der Mobilstation zuerst die gesicherte Laufzeitumgebung (TEE) in Betrieb genommen wird und anschließend die normale Ausführungsumgebung (Normal Zone) in Betrieb genommen wird, so dass die Bindung vor Inbetriebnahme der normalen Ausführungsumgebung (Normal Zone) verifiziert wird.

## Claims

1. A mobile station having an end device (ME) and having a removable or hard-implemented security element (SIM) operable in the end device (ME), wherein a binding between the end device (ME) and the security element (SIM) is devised, so that the end device (ME) and the security element (SIM) are operable with each other only according to the binding, wherein a secret key (PrK; KST) is stored in the security element (SIM), and a verification key corresponding to the secret key (PuK; KSA) is stored in the end device (ME), so that the binding between the end device (ME) and the security element (SIM) is verifiable by means of the secret key (PrK; KST) and the verification key (PuK; KSA), **wherein**
the end device (ME) comprises a secure runtime environment (TEE) and the verification key (PuK; KST) is stored in the secure runtime environment (TEE), and that in the secure runtime environment (TEE) further at least a part of a radio interface layer, RIL, driver (RIL driver) is implemented which is devised for communicating at hardware level between a security operating system in the secure runtime environment (TEE) and the security element (SIM), and wherein a binding application (SIM Lock Trustlet) is devised for communicating within the secure runtime environment (TEE) with the at least part of the RIL driver.

2. The mobile station according to claim 1, wherein in the secure runtime environment (TEE) a binding application (SIM Lock Trustlet) operable exclusively under control of the secure runtime environment (TEE) is implemented with which the binding between the end device (ME) and the security element P (SIM) is verifiable, and wherein the verification key (PuK; KST) is callable exclusively by the binding application (SIM Lock Trustlet).

3. The mobile station according to claim 1 or 2, wherein in the security element (SIM) a binding applet (SIM Lock Applet) is implemented with which the binding between the end device (ME) and the security element (SIM) is verifiable, and wherein the secret key (PrK; KSA) is callable exclusively by the binding applet (SIM Lock Applet).

4. The mobile station according to any of claims 1 to 3, wherein the end device (ME) further has a normal runtime environment (Normal Zone) and the verification key (PuK; KST) is inaccessible from the normal runtime environment (Normal Zone).

5. A method in a mobile station according to any of claims 1 to 4, for verifying the binding between the end device (ME) and the security element (SIM), wherein a verification request (RND) is sent by the end device (ME) to the security element (SIM), a verification response is sent by the security element (SIM) to the end device (ME) in which a verification information item (SIG) generated by means of the secret key (PrK; KSA) is contained, the verification response is checked by the end device (ME) by means of the verification key (PuK; KST) and, depending on the result of the check, the binding between the end device (ME) and the security element P (SIM) is verified as existing or not existing.

6. The method for putting into operation a mobile station, wherein the binding of the mobile station is verified with a method according to claim 5 and,
- if the bond between the end device (ME) with the security element (SIM) is verified as existing, the putting into operation of the mobile station is granted, and,
- if the bond between the end device (ME) with the security element (SIM) is verified as not existing, the putting into operation of the mobile station is prevented or aborted.

7. The method according to claim 6, wherein the mobile station is further designed according to any of claims 2 to 4.

8. The method according to claim 6 or 7, wherein
- if the binding between the end device (ME) with the security element (SIM) is verified as existing, by which the putting into operation of the mobile station at hardware level is granted by at least a part of the RIL driver, and,
- if the binding between the end device (ME) with the security element (SIM) is verified as not existing, by which the putting into operation of the mobile station at hardware level is prevented or aborted by at least a part of the RIL driver.

9. The method according to claim 8, wherein the end device (ME) further has a normal runtime environment (Normal Zone) and the verification key (PuK; KST) is inaccessible from the normal runtime environment (Normal Zone), and wherein upon the putting into operation of the mobile station first the secure runtime environment (TEE) is put into operation and thereupon the normal runtime environment (Normal Zone) is put into operation, so that the binding is verified before the putting into operation of the normal runtime environment (Normal Zone).

## Revendications

1. Station mobile dotée d'un terminal (ME) et d'un élément de sécurité (SIM) qui est exploitable dans le terminal (ME) et qui peut être enlevé ou mis en oeuvre à demeure,
cependant que, entre le terminal (ME) et l'élément de sécurité (SIM), une attache est établie, de telle sorte que le terminal (ME) et l'élément de sécurité (SIM) ne sont exploitables l'un avec l'autre que suivant l'attache, cependant que, dans l'élément de sécurité (SIM), une clé secrète (PrK; KST) est mémorisée, et que, dans le terminal (ME), une clé de vérification (PuK; KSA) correspondant à la clé secrète est mémorisée, telle sorte que l'attache entre le terminal (ME) et l'élément de sécurité (SIM) est vérifiable au moyen de la clé secrète (PrK; KST) et de la clé de vérification (PuK; KSA), **cependant que**
le terminal (ME) comprend un environnement d'exécution (TEE) sécurisé et que la clé de vérification (PuK; KST) est mémorisée dans l'environnement d'exécution (TEE) sécurisé, et que, dans l'environnement d'exécution (TEE) sécurisé, en outre au moins une partie d'un pilote de Radio Interface Layer, RIL, (RIL driver) est mis en oeuvre, lequel est configuré pour la communication au niveau hardware entre un système d'exploitation de sécurité dans l'environnement d'exécution (TEE) sécurisé et l'élément de sécurité (SIM), et cependant qu'une application d'attache (SIM Lock Trustlet) est configurée pour, à l'intérieur de l'environnement d'exécution (TEE) sécurisé, communiquer avec la au moins une partie du pilote RIL (RIL driver).

2. Station mobile selon la revendication 1, cependant que, dans l'environnement d'exécution (TEE) sécurisé, une application d'attache (SIM Lock Trustlet) exploitable exclusivement sous commande de l'environnement d'exécution (TEE) est mise en oeuvre, avec laquelle l'attache entre le terminal (ME) et l'élément de sécurité (SIM) est vérifiable, et cependant que la clé de vérification (PuK; KST) est appelable exclusivement par l'application d'attache (SIM Lock Trustlet).

3. Station mobile selon la revendication 1 ou 2, cependant que, dans l'élément de sécurité (SIM), un applet d'attache (SIM Lock Applet) est mis en oeuvre, avec lequel l'attache entre le terminal (ME) et l'élément de sécurité (SIM) est vérifiable, et cependant que la clé secrète (PrK; KSA) est appelable exclusivement par l'applet d'attache (SIM Lock Applet).

4. Station mobile selon une des revendications de 1 à 3, cependant que le terminal (ME) comporte en outre un environnement de réalisation normal (Normal Zone), cependant que la clé de vérification (PuK; KST) est inaccessible depuis l'environnement de réalisation normal (Normal Zone).

5. Procédé, dans une station mobile selon une des revendications de 1 à 4, destiné à la vérification de l'attache entre le terminal (ME) et l'élément de sécurité (SIM), cependant que, par le terminal (ME), une demande de vérification (RND) est envoyée à l'élément de sécurité (SIM),
que, par l'élément de sécurité (SIM) une réponse de vérification est envoyée au terminal (ME), dans laquelle une information de vérification (SIG) générée au moyen de la clé secrète (PrK; KSA) est contenue, que, par le terminal (ME), la réponse de vérification est examinée au moyen de la clé de vérification (PuK; KST), et que, en fonction du résultat de l'examen, l'attache entre le terminal (ME) et l'élément de sécurité (SIM) est vérifiée en tant qu'existante ou non existante.

6. Procédé de mise en service d'une station mobile, cependant que, par un procédé selon la revendication 5, l'attache de la station mobile est vérifiée, et que
- dans le cas où l'attache entre le terminal (ME) et l'élément de sécurité (SIM) est vérifiée en tant qu'existante, la mise en service de la station mobile est concédée, et,
- dans le cas où l'attache entre le terminal (ME) et l'élément de sécurité (SIM) est vérifiée en tant que non existante, la mise en service de la station mobile est empêchée ou interrompue.

7. Procédé selon la revendication 6, cependant que la station mobile est en outre conçue selon selon une des revendications de 2 à 4.

8. Procédé selon la revendication 6 ou 7, cependant que
- dans le cas où l'attache entre le terminal (ME) et l'élément de sécurité (SIM) est vérifiée en tant qu'existante, par la au moins une partie du pilote RIL (RIL driver), la mise en service de la station mobile est concédée au niveau hardware, et
- dans le cas où l'attache entre le terminal (ME) et l'élément de sécurité (SIM) est vérifiée en tant que non existante, par la au moins une partie du pilote RIL (RIL driver), la mise en service de la station mobile est empêchée ou interrompue au niveau hardware.

9. Système de terminal selon la revendication 8, cependant que le terminal (ME) comporte en outre un environnement de réalisation normal (Normal Zone), cependant que la clé de vérification (PuK; KST) est inaccessible depuis l'environnement de réalisation normal (Normal Zone), et cependant que, lors de la mise en service de la station mobile, c'est tout d'abord l'environnement d'exécution (TEE) sécurisé qui est mis en service, l'environnement de réalisation normal (Normal Zone) étant mis en service ensuite, de telle sorte que l'attache est vérifiée avant la mise en service de l'environnement de réalisation normal (Normal Zone).
